# EUROPEAN PATENT APPLICATION

(11) **EP 1 596 485 A2**
(43) Date of publication of application: **16.11.2005**
(21) Application number: 05252124.2
(22) Date of filing: 05.04.2005
(51) Int. Cl.: H02J 7/00

(54) **Energy safety notification system for electronic devices**

(30) Priority: 15.04.2004 US 824704
(71) Applicant: MOTOROLA, INC., Schaumburg, IL 60196 (US)
(72) Inventor: Fischl, Steven R., Lawrenceville, Georgia 30043 (US)
(74) Representative: McLeish, Nicholas Alistair Maxwell

(57) **Abstract**

This invention provides an apparatus and method for displaying safety information about a power source to a user. When a power source is coupled to the device, and the device is turned on, safety information is presented to the user by way of a display. The user is then able to scroll through and read the information. Once read, the user has an opportunity to either accept or reject the information. In one embodiment, if the user rejects the safety information, the device is powered down. If the user acknowledges the device, the device becomes operational. Features of the system include allowing the user to select whether the information is re-displayed, and optional polling of carriers and other third parties for additional safety information.

## Description

### BACKGROUND

### TECHNICAL FIELD

This invention relates generally to notification systems for electronic devices, and more particularly to a system for providing a user with safety information relating to the power source of the electronic device.

### BACKGROUND ART

Most electronic devices available today, like mobile telephones, radios, pagers, MP3 players and PDAs, rely upon rechargeable batteries as a power source. Rechargeable batteries offer convenience by making the device portable. In addition, they reduce the overall cost of operating a device, as the user may simply recharge the battery rather than having to purchase new batteries each time they run out of energy.

Rechargeable batteries are typically made from elements like lithium or nickel. Popular chemistries for rechargeable batteries include nickel-cadmium (NiCd), nickel-metal-hydride (NiMH), lithium-ion, and lithium-polymer. While these chemistries work well for storing and delivering energy, certain precautions must be taken when using rechargeable batteries. For example, it is not desirable to dispose rechargeable batteries in fire. Similarly, it is not desirable for a user to disassemble a rechargeable battery, as its reliability will generally be compromised in the process. Additionally, rechargeable batteries need to be charged in a specific manner for optimum performance.

As a result of these and other concerns, nearly all battery manufacturers include some type of safety information somewhere on the battery. This information is frequently printed on a battery label, and may include some standard, international symbols. Often, however, it is simply written out on the label in the language of the country in which the battery is being sold.

For global battery manufacturers, this need to provide safety information to the user in different languages presents a problem: a different label must used for each country. For example, a label with English text would be used in the United States, while a label with Chinese text would be used in China. The multiple label requirement decreases manufacturing efficiency and increases overall product cost. To compound this problem, some countries use multiple languages or dialects. For example, both French and English are used as languages in Canada.

One prior art solution to this multiple label problem is to make a single label with multiple languages printed thereon. The problem with this problem is that both batteries and electronic devices are becoming smaller and smaller. For example, whereas the phones of yesterday were the size of a shoe, today they easily fit inside a shirt pocket. Due to this reduction in size, multi-language labels are ineffective in that the font size required to fit 15 or more different languages on a single label is nearly impossible to read with the naked eye. Additionally, the amount of information is limited by label size. As a result, designers sometimes have to condense a page of information into a few sentences.

There is thus a need for an improved method of delivering energy source information to a user of an electronic device.

### BRIEF DESCRIPTION OF THE DRAWINGS

FIG. 1 illustrates an electronic device and power source in accordance with the invention.
FIG. 2 illustrates a schematic block diagram of a device in accordance with the invention.
FIG. 3 illustrates a software flow chart associated with presenting safety information to a user in accordance with the invention.
FIG. 4 illustrates a flow chart of one embodiment of detecting whether a power source has been decoupled from a device since the device was last operational.
FIG. 5 illustrates one embodiment of a high-level safety warning associated with unrecognized power sources in accordance with the invention.
FIG. 6 illustrates a flow chart directed to polling a third party for additional safety information in accordance with the invention.
FIG. 7 illustrates an environment in which an electronic device may poll a third party for additional safety information in accordance with the invention.

### DETAILED DESCRIPTION OF THE INVENTION

A preferred embodiment of the invention is now described in detail. Referring to the drawings, like numbers indicate like parts throughout the views. As used in the description herein and throughout the claims, the following terms take the meanings explicitly associated herein, unless the context clearly dictates otherwise: the meaning of "a," "an," and "the" includes plural reference, the meaning of "in" includes "in" and "on."

This invention provides safety information pertaining to the power source to a user on the display of the device. Stated differently, with this invention, when a power source, like a battery, battery charger, or power supply is coupled to the device, and the device is turned on, safety information pertaining to that energy source is presented on the display of the device for a user to read. In one preferred embodiment, the user then is able to scroll through and read the information on the screen. Once the information has been read, the user can then indicate that he understands the information by pressing a key associated with an affirmative acknowledgement of the information. Upon acknowledgement, the user is then able to use the device normally. In one embodiment, if the user fails to acknowledge or presses a non-acknowledgement key, the device is powered down, as it is often prudent for a user to understand the safety information associated with a device prior to use.

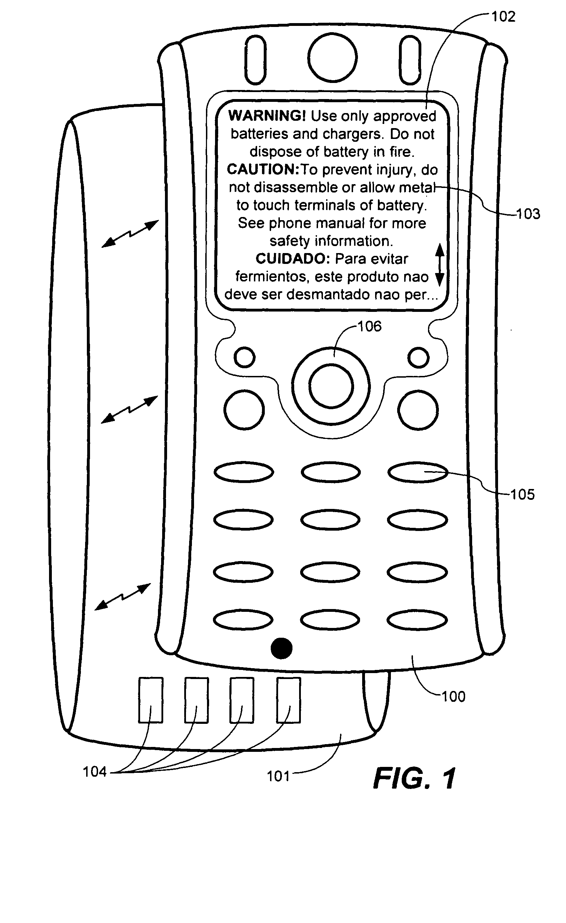

Turning now to FIG. 1, illustrated therein is an electronic device capable of presenting safety information about the power source to a user in accordance with the invention. A portable electronic device 100 and a power source 101 are shown. While one embodiment of the invention is directed to a cellular telephone as the electronic device and a rechargeable battery as the power source, it will be clear to those of ordinary skill in the art that the invention is not so limited. The invention could equally be applied to a variety of electronic devices, including radios, pagers, PDAs, MP3 players, laptop computers and the like. Similarly, rather than using a rechargeable battery as the power source, other devices, including power supplies, battery chargers, fuel cells, Stirling engines, solar cells and the like could be substituted.

The electronic device 100 includes a display 102 that is visible to a user. The display 102 generally comprises a liquid-crystal display, but other displays may be equally used. The power source 101 is capable of mechanically and/or electrically coupling to the electronic device 100 so as to provide the energy needed to operate the device 100.

Safety information 103 pertaining to the power source 101 is presented on the display 102. One example of such safety information 103 may be, "Do not dispose of battery in fire." Other information may include "Do not disassemble" or "Please recycle." The safety information 103 may be presented either in the language of choice that has been selected within the electronic device 100, or it may be shown in multiple languages as local customs, laws, and regulations require.

It is sometimes desirable to present the safety information only once, preferably during the first use after a power source 101 has been connected to the device 100. A user needs to know the information, but may become annoyed if the information is presented again and again after the user has read, understood and learned the information. For this reason, the electronic device 100 includes circuitry for determining when the power source is decoupled. This detection circuitry may include circuitry for detecting when the battery contacts 104 are coupled to the device 100. For example, a voltage detector may sense battery voltage at the terminals of the device 100, or data circuitry may detect the presence of a memory device within the power source 101. Likewise, a mechanical switch coupled to the electronic device may detect when a battery is decoupled.

The electronic device 100 includes buttons, e.g. 105, with which a user may input information into the device. Additionally, multi-function buttons, e.g. 106, may allow the user to scroll through information 103 on the display 102.

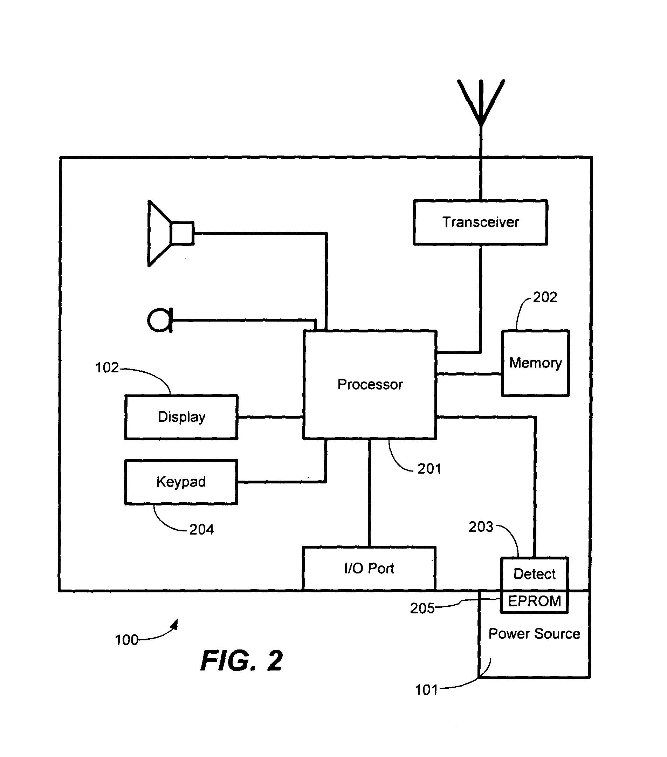

Turning now to FIG. 2, illustrated therein is a circuit block diagram illustrating a portable telephone communication system 100, in keeping with the exemplary embodiment started in FIG. 1. Note that other electronic devices will include similar systems and circuitry.

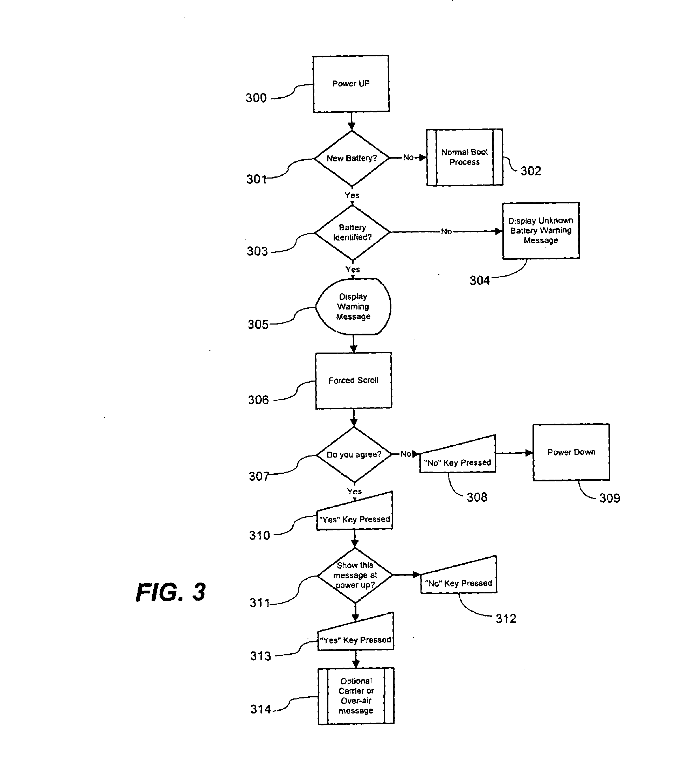

The system 200 includes a microprocessor 201, which serves as the device's central processing unit. A memory module 202 is coupled to the microprocessor 201. Software code, which is executable by the microprocessor 201, is disposed within the memory 202. The software stored within the memory 202 includes commands corresponding to a plurality of steps for presenting the information relating to the power source upon the display 102. These steps will be recited in detail with reference to FIGS. 3-6 below.

The device 100, as noted in the discussion of FIG. 1, includes a detector 203 capable of detecting the presence of the power source 101. The detector 203 may be capable of detecting whether the power source 101 has been coupled to the device 100 since the last power down operation. The detector 203 may also be capable of identifying the power source, for example by reading identification data from a memory 205, like an EPROM, disposed within the power source 101. When the power source 101 is detected, as directed by the software, the microprocessor 201 then presents information about the power source 101 on the display 102 per the software's direction.

This direction may include presenting the information when power is applied to the device 100, or presenting the information when the device 100 is turned on. Where the device 100 is capable of detecting the presence of the power source 101, the direction may include presenting the information when both the device 100 has detected that the power source 101 has been decoupled since the last time the device 100 was turned off or otherwise powered down, or presenting the information only if the power source 101 has been coupled to the device 100 since the last power down operation, or presenting the information when both the power source 101 has been decoupled since the device 100 was turned off, and the device 100 is turned on.

When the information is presented on the display 102, in one preferred embodiment the information is maintained on the display 102 until the user depresses a key on the keypad 204, or otherwise inputs information into the device 100.

Turning now to FIG. 3, illustrated therein is a flow chart corresponding to software instructions or steps for providing safety information to a user. At step 300, the device 100 is turned on or powered up. At step 301, the device determines whether the battery, or other power source, is the same as at last power down, or whether it is new. This determination may be made in any of several ways.

Recall that as mentioned above, it is desirable to present the safety information to the user only when the power source has been changed or decoupled from the device. Thus, where the power source does not include identification information like an EPROM 205 or coding resistor, a new power source will be detected if the detector detects that the power source has been decoupled since the last power down operation. If the power source does include identification information, a new power source will be detected if the detector detects that the power source has been decoupled since the last power down and the identification information is not the same as with the previous power source. If no new battery or power source is detected, the normal start-up or boot process occurs at step 302.

Where the system includes a power source having identification information, and if a new battery or power source is detected, the device 100 checks to see if the power source is identifiable at step 303. For example, if the identification information includes a manufacturer's code, the device may check to see if the power source has been made by a manufacturer with certifiably safe products. If the power source is not identified, then safety information of a first type, for example an unknown product warning message, may appear at step 304. This warning may include language indicating that the type of power source is unknown, and that there may be an increased risk associated with using the product.

If the battery is identified, then safety information of a second type, for example basic safety information message, is displayed at step 305. Note that where the system does not include a power source having identification information, step 303 would be omitted from the routine.

The forced scroll operation at step 306 ensures that the user sees the entirety of the message displayed on the screen. For example, the scroll may be forced by displaying another segment of the information when each time a key is depressed, and so on, until the entire message is displayed. Alternatively, dedicated up/down scroll buttons may be provided on the device. The scrolling feature solves the problem of condensed information, as it is no longer necessary for engineers to summarize information. The information may be displayed in its entirety .

At step 307, a confirmation message is displayed on the screen. The confirmation message asks the user to input either an acceptance of the safety information or a rejection of the safety information. The acceptance may consist of a simple message like "Do you understand and agree to these terms? If yes, press 1. If no, press 2." In the alternative, the message might state "By pressing any key other than POWER, you are agreeing that you have read and understand this information."

The user then either enters an acceptance of the safety information, for example at step 310, or a rejection of the safety information at step 308. If the user rejects the safety information, in one preferred embodiment, the device powers down at step 310. This is generally desirable in that it is not prudent for a user to operate a device when the user has indicated that they do not understand the safety information associated therewith.

At step 311, there is an optional "show this message at power up" prompt. Once the user has read and understands the information associated with the device, some manufacturers may not want to burden the user by presenting the message time and time again. As such, the option of presenting the information each time the device is powered up at step 311 allows the user to indicate that he does not want to see the information again. The user's desire is communicated to the device through the "yes" or "no" entries of steps 313 and 312, respectively.

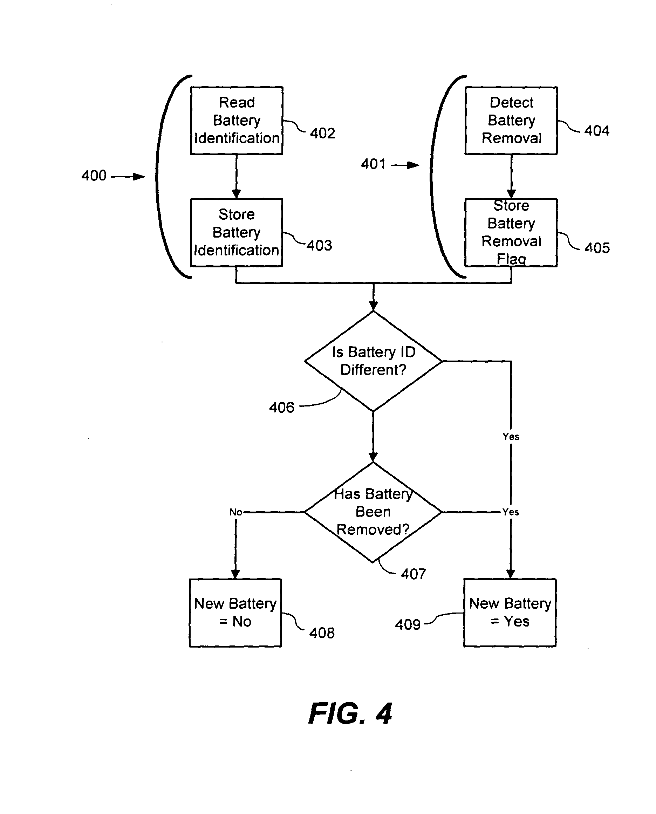

Most manufacturers will not want to allow a user to disallow the message when the power source has been changed. For example, if the user changes the power source from an identified, reliable source to an unidentified, unreliable source, the manufacturer may wish for the safety information to be presented again regardless of the user's selection at either step 313 or 312. For this reason, in one preferred embodiment, the software overrides the user's selection at either step 313 or 312 when a power source is decoupled. Methods of sensing whether the power source has been changed, mentioned briefly above, will be discussed again with respect to FIG. 4.

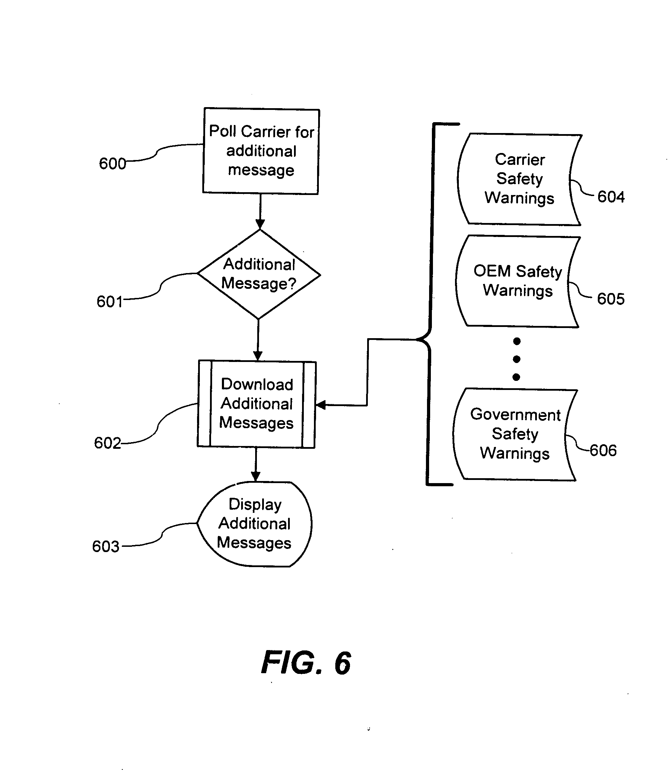

At step 314, there is an optional opportunity to poll a carrier or other third party for additional safety information. For example, when product recalls, new safety information or warranty notices arise, it may be desirable for the device not only to display information stored locally within the device, but also downloaded information as well. For this reason, step 314 offers the opportunity to gather such information. The details of step 314 will be illustrated in the discussion of FIG. 6.

Turning now to FIG. 4, one preferred method of determining whether the battery or other power source has been decoupled since the device was last operational will be examined in more detail. As mentioned above, power sources come both with identification information and without. As such, two branches 400,401 are shown here, one for detecting whether a power source having identification information has been decoupled 400, and another for detecting whether a power source without identification information has been decoupled 401.

For power sources with identification information, this identification information is read by the device at step 402. The information is stored at step 403. At step 406, the recently read information is compared from stored information, which corresponds to the power source identification information stored at the last time the device was operational. If the information matches, as determined at step 407, no new power source is indicated at step 408. Otherwise, a new power source is indicated at step 409. Note that if the power source has been changed from one that had identification to one that does not have identification information, or vice versa, the algorithm will proceed to step 409, as there will be no match at step 407.

For power sources that do not have identification information, a detector detects decoupling at step 404. As mentioned above, the detector could be a mechanical detector, for example a push button that sets a switch when a power source is coupled. It could also be a mechanical detector that detects the coupling of a connector. In the alternative, the detector may include an electrical switch that detects the presence of a voltage at the power source connectors, and sets an internal flag in the microprocessor accordingly. In either event, a toggling of this detector is set as a removal flag at step 405. The device then checks to see if this flag has been toggled at step 406. If yes, then the device proceeds to step 409. If not, the device proceeds to step 408.

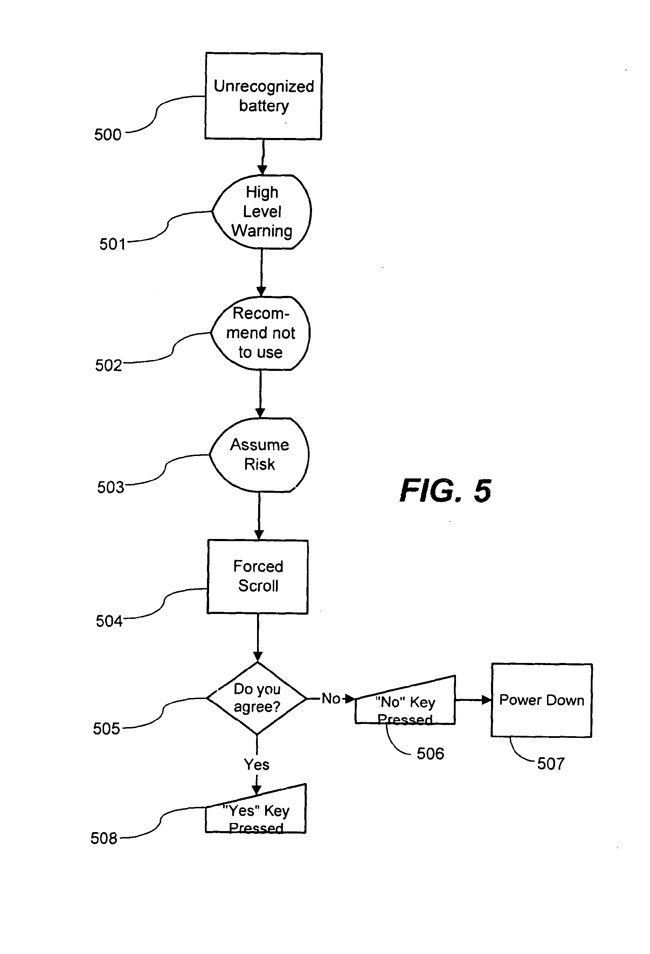

Turning now to FIG. 5, illustrated there is one preferred embodiment of an unknown power source warning information message. Recall that step 304 of FIG. 3 discussed presenting an, unknown warning message where a power source was not identified. FIG. 5 illustrates one such method of presenting such a message.

At step 500, the device has learned that the power source is unidentified. At step 501, a high-level warning is presented to the user. This high level warning may indicate, for example, that an unrecognized power source can not be authenticated for safety, and that a higher risk is associated with unknown power sources. Additionally, a recommendation not to use unknown power sources may be presented at step 502. Prior to use, some manufacturers may desire to include an assumption of risk message at step 503.

The forced scroll of step 504 is the same as is recited above, and it ensures that the entirety of the message is displayed, without need for editing or consolidation. To ensure that the message is displayed until user acknowledgement, an acknowledgement prompt is presented at step 505. As with the routine of FIG. 3, the user may acknowledge either in the affirmative or in the negative at steps 508, and 506, respectively. If the user acknowledges in the negative, one option is to power down the device at step 507.

Turning now to FIG. 6, illustrated therein is one preferred embodiment of polling a third party for an additional safety message. This corresponds to optional step 314 of FIG. 3. Where this is employed, the device will poll the carrier for additional information at step 600. The carrier will acknowledge, either positively or negatively, at step 601. If the acknowledgement is in the affirmative, the device will download the information at step 602. While the information may be any of a number of types, exemplary information includes carrier safety information, OEM or manufacturer safety information, and government-based safety information. Examples of government-based safety information include FDA warnings, CPSC, warnings, and WHO warnings.

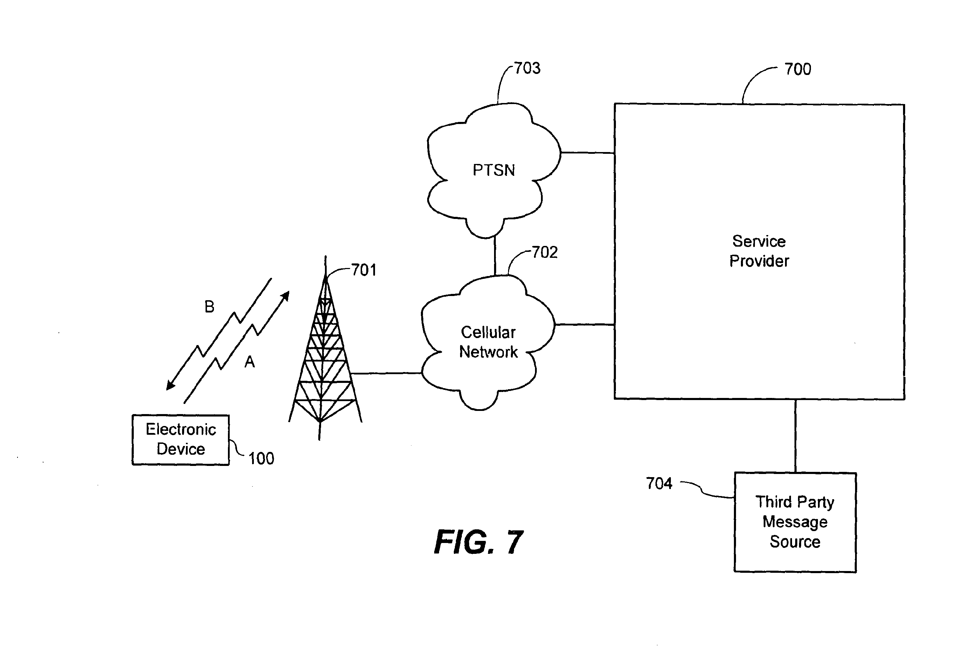

Turning now to FIG. 7, illustrated therein is a top-level block diagram of one environment in which an electronic device 100 that receives messages from a third party may be used. To receive such a message, the device 100 needs communications capabilities. For communications devices, like cellular phones for example, communication is generally carried on with a service provider having at least one service center 700.

In the system, the device 100 and the service center 700 may communicate with each other via wireless communications. The wireless communications are illustrated in FIG. 7 by communication arrows A and B. As shown in FIG. 1, in one embodiment, the communication A is a cellular wireless communication that is transmitted to a base station antenna 701, through a cellular network 702 and a public switched telephone network (PSTN) 703, and to the service center 703. The service center 700 includes computers within which the third party safety messages are stored. Where the messages are, for example, OEM or governmental messages, these messages are communicated to the service center 700 from that particular third party 704.

Those of ordinary skill in the art, having the benefit of this disclosure, will appreciate that many possible wireless communication methods may be used for communications from the device 100 to the service center 700. In one embodiment, the communications are via a cellular wireless communication such as AMPS, CDMA, GSM or TDMA. The transmission from the device 100 to the service center 700 may also be made by other wireless communications such as a satellite communications.

In response to receiving informational query from the device 100, the service center 700 may transmit any locally stored safety information to the device 100. In one embodiment, the communication B is a cellular wireless communication that is sent through the public switched telephone network (PSTN) 703 and cellular network 702 and transmitted by the base station antenna 701 to the device 100. The device may then display the information on the display.

While the preferred embodiments of the invention have been illustrated and described, it is clear that the invention is not so limited. Numerous modifications, changes, variations, substitutions, and equivalents will occur to those skilled in the art without departing from the spirit and scope of the present invention as defined by the following claims.

## Claims

1. A portable electronic device, comprising:
a. a display, wherein the display is visible to a user; and
b. a power source;
wherein the portable electronic device presents safety information pertaining to the power source on the display.

2. The device of claim 1, wherein the safety information is presented on the display when the device is turned on.

3. The device of claim 1, wherein the device is capable of detecting whether the power source has been decoupled since the device was turned off.

4. The device of claim 3, wherein the presentation of safety information occurs when the following have occurred:
a. the power source has been decoupled since the device was turned off; and
b. the device is turned on.

5. The device of claim 2 or claim 3, wherein the safety information remains visible on the display until a user inputs information into the device.

6. The device of claim 5, wherein the inputted information is selected from the group consisting of an acceptance of the safety information and a rejection of the safety information.

7. The device of claim 6, wherein when the inputted information comprises the rejection of the safety information, the device turns off.

8. The device of claim 1, wherein the device is capable of identifying the power source coupled thereto.

9. The device of claim 8, wherein when the power source is identified, safety information of a first type is presented on the display, further wherein the power source is not identified, safety information of a second type is presented on the display.

10. The device of claim 1, wherein the power source comprises a rechargeable battery.

11. An electronic device, comprising:
a. a microprocessor;
b. memory coupled to the microprocessor, the memory having disposed therein software executable by the microprocessor; and
c. a display;
wherein the software includes a plurality of steps, the steps comprising:
a. detecting the presence of a power source; and
b. presenting information about the power source on the display.

12. The device of claim 11, wherein the steps further comprise maintaining the information on the display until a user presses a key.

13. The device of claim 12, wherein the presenting of information occurs at power being applied to the device.

14. The device of claim 12, wherein the steps further comprise detecting whether the power source has been coupled to the device since the last power down operation.

15. The device of claim 14, wherein the device presents information about the power source on the display only if the power source has been coupled to the device since the last power down operation.

16. The device of claim 12, wherein the steps further comprise identifying the power source.

17. The device of claim 16, wherein when the power source is identified, a first information message is presented on the display, further wherein when the power source is not identified, a second information message is presented on the display.

18. The device of claim 12, wherein the steps further comprise polling a third party for an additional information message.

19. The device of claim 18, wherein the additional information message is selected from the group consisting of carrier safety information, OEM safety information and government safety information.

20. The device of claim 12, wherein the key is selected from the group consisting of at least a key indicating acknowledgement of the information and at least a key indicating non-acknowledgement of the information.

21. The device of claim 20, wherein when the key selected by the user is the at least a key indicating non-acknowledgement of the information, the device powers down.

22. The device of claim 12, wherein the steps comprise scrolling the information across the display.

23. The device of claim 11, wherein the device is selected from the group consisting of telephones, pagers, two-way radios, computers, PDAs and MP3 players.

24. The device of claims 11 or 12, wherein the power source comprises a rechargeable battery.

25. A method of presenting safety information relating to a rechargeable battery to a user, the method comprising the steps of:
a. detecting whether the rechargeable battery has been decoupled from the device since the device was last operational;
b. presenting the safety information on a display of the device; and
c. maintaining the presentation of the safety information on the display until user acknowledgement.

26. The method of claim 25, further comprising powering down the device if the user acknowledges the safety information in the negative.

27. The method of claim 25, further comprising removing the safety information from the display if the user acknowledges the safety information in the affirmative.

28. The method of claim 25, further comprising identifying the type of rechargeable battery coupled to the device.

29. The method of claim 28, wherein if the type of rechargeable battery is recognized by the device, safety information of a first type is presented on the display, further wherein if the type of rechargeable battery is not recognized by the device, safety information of a second type is presented on the display.

30. The method of claim 25, further comprising polling a carrier for additional safety information.
